# EUROPÄISCHE PATENTANMELDUNG

(11) **EP 2 109 153 A2**
(43) Veröffentlichungstag der Anmeldung: **14.10.2009**
(21) Anmeldenummer: 09005214.3
(22) Anmeldetag: 09.04.2009
(51) Int. Cl.: H01L 31/048, H01L 31/042, E04D 13/18

(54) **Solarelement für Solaranlagen**

(30) Priorität: 09.04.2008 DE 102008018077
(71) Anmelder: Ralos Vertriebs GmbH, 64720 Michelstadt (DE)
(72) Erfinder: Schölzl, Günter, 78727 Oberndorf (DE)
(74) Vertreter: Maser, Jochen

(57) **Zusammenfassung**

Die Erfindung betrifft ein Solarelement für Solaranlagen, insbesondere Photovoltaikanlagen, mit einem Grundkörper (12), der eine Vielzahl von miteinander verbundenen Solarzellen umfasst und an einer Rückseite des Grundkörpers (12) eine Anschlussvorrichtung (14) aufweist und mit zumindest einem Befestigungselement (18) zur Montage an einer Unterkonstruktion (46), wobei das zumindest eine Befestigungselement (18) an der Rückseite des Grundkörpers (12) vorgesehen ist und eine rahmenlose Befestigung zum Grundkörper (12) bildet und das zumindest eine an der Rückseite des Grundkörpers (12) angeordnete Befestigungselement (18) durch eine Klebeverbindung an dem Grundkörper (12) befestigt ist.

## Beschreibung

Die Erfindung betrifft ein Solarelement für Solaranlagen, insbesondere Photovoltaikanlagen, mit einem Grundkörper, der eine Vielzahl von miteinander verbundenen Solarzellen umfasst und an einer Rückseite des Grundkörpers eine Anschlussvorrichtung aufweist und mit zumindest einem Befestigungselement zur Montage an einer Unterkonstruktion.

Solche Solarelemente werden zur Herstellung von Photovoltaikanlagen eingesetzt, um das durch die Sonne gelieferte Energiepotential kostenlos und umweltfreundlich auszuschöpfen. Solche Photovoltaikanlagen werden beispielsweise auf Hausdächern oder in Fassaden sowie als Verschattung an Gebäuden integriert. Dadurch kann zum einen das Gebäude selbst mit Energie versorgt werden und zum anderen kann darüber hinaus erzeugte elektrische Energie in das öffentliche Stromnetz eingespeist werden.

Die Solarelemente für solche Anlagen umfassen mehrere Solarzellen, die miteinander elektrisch verbunden sind. Solche Solarzellen bestehen aus einem Halbleiter und werden zumeist aus Silizium hergestellt.

Solche Solarelemente, wie aus einem Prospekt "RA zFaz Montagesysteme für PV-Module, Stand 27. Februar 2008 der Anmelderin hervorgeht, werden mit einem umlaufenden Rahmen versehen, wobei zwischen dem umlaufenden Rahmen, der aus Metall besteht und dem Grundkörper des Solarelementes ein Gummiprofil oder Dichtungsprofil vorgesehen ist. Diese Solarelemente werden mittels einer Klemmbefestigung über den Rahmen an einer Unterkonstruktion befestigt.

Aus einem Prospekt der Firma SCHOTT Solar GmbH In 63755 Altenau geht ein Dünnschicht-Solarmodul "Schott ASI" hervor. Durch diese neue Dünnschichttechnologie soll mehr Energie auch bei ungünstigen Lichtverhältnissen erzielbar sein. Diese Dünnschicht-Solarmodule werden ebenfalls mit einem vollumfaufenden Rahmen versehen. Zwischen dem Rahmen und dem Grundkörper ist ein Gummielement oder Gummiprofil vorgesehen, um den Grundkörper dauerhaft elastisch in dem Rahmen einzubetten. Gleichzeitig ermöglicht dieser Rahmen eine Befestigung, wie dies beispielsweise aus dem vorstehend genannten Prospekt der Anmelderin bekannt ist. Diese Anordnung weist jedoch den Nachteil auf, dass insbesondere bei Dünnschicht-Solarmodulen zwischen dem Grundkörper und dem Rahmen Feuchtigkeit ansammelt und eine sogenannte Staunässe sich bildet. Eine solche Staunässe kann zur Oxidation der Halbleiterschicht führen, wodurch es zu Beschädigungen an den Solarzellen kommen kann.

Deshalb liegt der Erfindung die Aufgabe zugrunde, ein Solarelement für Solaranlagen zu schaffen, welches eine einfache und schnelle Anordnung mehrerer Solarelemente an einer Unterkonstruktion zur Herstellung einer Solaranlage ermöglicht und die Bildung der Staunässe im Randbereich des Solarelementes vermeidet.

Diese Aufgabe wird erfindungsgemäß durch die Merkmale des Anspruchs 1 gelöst. Weitere vorteilhafte Ausgestaltungen und Weiterbildungen sind in den weiteren Ansprüchen angegeben.

Durch das erfindungsgemäße Solarelement, bei dem das zumindest eine an der Rückseite des Grundkörpers angeordnete Befestigungselement als rahmenlose Befestigung ausgebildet ist, wird verhindert, dass im Randbereich des Solarelementes sich Staunässe bilden kann, da der Randbereich nahezu vollständig oder vollständig frei von dem zumindest einen Befestigungselement ist. Diese rahmenlose Befestigung wird durch eine Klebeverbindung erzielt, durch welche das zumindest eine Befestigungselement an einer Rückseite am Grundkörper des Solarelementes angeordnet ist. Eine solche Ausgestaltung des Solarelementes ermöglicht eine einfache und schnelle Montage der Solarelemente an einer Unterkonstruktion, die auch für bisherige Solarelemente verwendet wurde. Durch die rahmenlose Befestigung der Solarelemente wird des Weiteren ermöglicht, dass eine höhere Flächenausnutzung gegeben ist, da die zwischen den aneinander grenzenden Solarelementen benötigte Fläche für die bisherige Rahmenkonstruktion zur Aufnahme und Fixierung der Solarelemente nicht mehr erforderlich ist. Darüber hinaus wird durch die Klebeverbindung eine dauerhaft elastische Lagerung des Grundkörpers zum zumindest einen Befestigungselement geschaffen.

Nach einer bevorzugten Ausgestaltung der Erfindung ist vorgesehen, dass wenigstens zwei, jeweils einem Befestigungspunkt zugeordnete Befestigungselemente zur Montage des Solarelementes an einer Unterkonstruktion vorgesehen sind. Durch diese zumindest zwei Befestigungselemente kann eine Fixierung des Solarelementes in einfacher Weise an der Unterkonstruktion ermöglicht sein. Diese zwei Befestigungselemente können beispielsweise an einem vordefinierten Kreuzungspunkt beziehungsweise Befestigungspunkt mit der Unterkonstruktion vorgesehen sein. Durch diese Ausgestaltung der Befestigungselemente werden sehr leichte Solarelemente hergestellt, die einen geringen Materialeinsatz für Befestigungselemente benötigen.

Nach einer alternativen Ausgestaltung der Erfindung ist vorgesehen, dass das zumindest eine Befestigungselement sich in der Länge über zwei Befestigungspunkte, die zur Montage des Solarelementes an einer Unterkonstruktion vorgesehen sind, erstreckt. Beispielsweise kann ein Befestigungselement als Befestigungsprofil vorgesehen sein. Eine solche Anordnung ermöglicht eine einfache Positionierung eines Befestigungselementes für beide Befestigungspunkte. Gleichzeitig ist die Ausrichtung des zumindest einen Befestigungselementes über zwei Befestigungspunkte einfach und schnell ermöglicht. Darüber hinaus kann eine Aussteifung des Grundkörpers erzielt werden.

Nach einer weiteren bevorzugten Ausgestaltung der Erfindung ist vorgesehen, dass zumindest zwei Befestigungspunkte, die zur Montage des Solarelementes an einer Unterkonstruktion vorgesehen sind, innerhalb der rückseitigen Fläche des Grundkörpers liegen. Dadurch wird beispielsweise ermöglicht, dass alle vier Seitenkanten des Grundkörpers als Anschlusskanten für ein benachbartes Solarelement zur Verfügung stehen. Die Befestigungspunkte an dem zumindest einen Befestigungselement zur Unterkonstruktion sind bevorzugt nahe am Randbereich des Grundkörpers vorgesehen, um eine einfache Montage zu ermöglichen. Alternativ können diese auch bis zu einer Seitenkante des Grundkörpers vom Solarelement reichen, wobei die Gefahr der Staunässe insoweit nicht gegeben ist, da der Randbereich über die Dicke des Grundkörpers nicht eingerahmt ist.

Nach einer weiteren alternativen Ausgestaltung der Erfindung ist vorgesehen, dass die zumindest zwei Befestigungspunkte des zumindest einen Befestigungselementes außerhalb der rückseitigen Fläche des Grundkörpers liegen. Bei einer solchen Ausführungsform können die bevorzugt als Befestigungsprofil ausgebildeten Befestigungselemente, die an der Rückseite des Grundkörpers durch die Klebeverbindung befestigt sind, sich über die Seitenkanten des Grundkörpers hinaus erstrecken, so dass eine einfache Zugänglichkeit für die Befestigung des Befestigungselementes an der Unterkonstruktion gegeben ist. Beispielsweise kann ein durchgehendes Profilelement vorgesehen sein, welches sich gegenüber zwei parallelen Seitenkanten des Grundkörpers jeweils darüber hinaus erstreckt.

Durch die durchgehenden Ausbildung des Befestigungselementes ist eine linienförmige Unterstützung gegeben. Dadurch kann auch eine verbesserte Kraftaufnahme aufgrund der größeren flächigen Verklebung gegeben sein. Alternativ kann auch vorgesehen sein, dass anstelle eines durchgehenden Befestigungsprofils zwei oder mehrere Profilabschnitte vorgesehen sind, die in derselben Längsachse liegen, um in Teilbereichen innerhalb der rückseitigen Fläche des Grundkörpers Freiräume zu schaffen.

Nach einer bevorzugten Ausführungsform der Erfindung ist vorgesehen, dass das zumindest eine Befestigungselement als Befestigungsprofil ausgebildet ist, welches eine zumindest abschnittsweise sich erstreckende Anlagefläche als Klebefläche zur Ausbildung einer Klebeverbindung aufweist. Dadurch kann eine hinreichend große Klebefläche zur Verfügung gestellt werden, um eine sichere Anbindung des Befestigungselementes an der Rückseite des Grundkörpers vom Solarelement zu ermöglichen. Gleichzeitig dient eine solche Anlagefläche für eine verwindungssteife Aufnahme des Grundkörpers. Das Befestigungselement weist der Anlagefläche gegenüberliegend zumindest einen Profil abschnitt auf, um das Befestigungselement an der Unterkonstruktion zu fixieren.

Nach einer weiteren bevorzugten Ausgestaltung der Erfindung ist vorgesehen, dass das zumindest eine Befestigungselement als Strangpressprofil mit wenigstens einem Anlageabschnitt und einem Halteabschnitt ausgebildet ist. In Abhängigkeit der Größe des Grundkörpers des Solarelementes und der Art der Befestigung kann in einfacher Weise die Länge des Befestigungselementes zugeschnitten werden. Somit kann eine kostengünstige Herstellung der Solarelemente erfolgen.

Nach einer weiteren bevorzugten Ausgestaltung der Erfindung ist vorgesehen, dass an dem Befestigungsprofil ein Adapterprofil zur Montage an der Unterkonstruktion vorgesehen ist. Ein solches Adapterprofil verbindet das zumindest eine Befestigungsprofil zur Unterkonstruktion. Bevorzugt sind an einem Solarelement zwel Befestigungsprofile als Befestigungselemente parallel zueinander beabstandet vorgesehen. Das Adapterprofil erstreckt sich bevorzugt rechtwinklig zu dem zumindest einen Befestigungselement am Grundkörper des Solarelementes. Bevorzugt werden mehrere Solarelemente mit deren Befestigungselementen an dem Adapterprofil befestigt, welches wiederum an der Unterkonstruktion vormontiert ist.

Nach einer bevorzugten Ausgestaltung der Erfindung ist vorgesehen, dass das Solarelement als Dünnschichtmodul ausgebildet ist, bei dem der Grundkörper eine Schicht aus einem gehärteten Glas, eine Schicht aus Floatglas und dazwischen liegend eine Schicht aus Solarzellen umfasst. Die rahmenlose Befestigung durch Verklebung eignet sich insbesondere bei solchen Dünnschichtmodulen, da der Randbereich frei von Befestigungselementen gehalten ist und eine Staunässe vermieden wird.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Rückansicht eines erfindungsge- mäßen Solarelementes,
- Figur 2: eine schematische Seitenansicht des Solarelementes gemäß Figur 1,
- Figur 3: eine weitere schematische Seitenansicht gemäß Fi- gur 1,
- Figur 4: eine schematische Rückansicht einer alternativen Ausführungsform eines Solarelementes zu Figur 1,
- Figur 5: eine schematische Rückansicht einer weiteren alter- nativen Ausführungsform eines Solarelementes zu Figur 1,
- Figur 6: eine schematische Seitenansicht der Ausführungs- form gemäß Figur 5,
- Figur 7: eine weitere schematische Seitenansicht der Ausfüh- rungsform gemäß Figur 5 und
- Figur 8: eine schematische Seitenansicht von Solarelementen einer Solaranlage, die auf einer Unterkonstruktion fi- xiert sind.

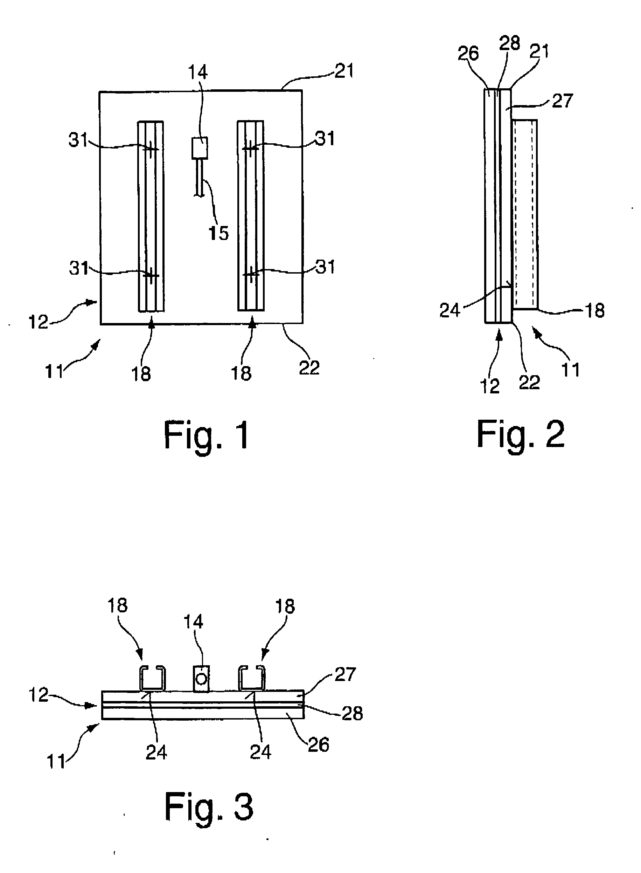

In Figur 1 ist eine schematische Ansicht auf eine Rückseite eines Solarelementes 11 dargestellt, welche zusammen mit einer Vielzahl von weiteren Solarelementen 11 zur Bildung einer Solaranlage, insbesondere Photovoltaikanlage, einsetzber ist. Das Solarelement 11 umfasst einen Grundkörper 12 mit einer Vielzahl von nicht näher dargestellten Solarzellen. An dessen Rückseite ist eine Anschlussvorrichtung 14 vorgesehen, welche mit den Solarzellen elektrisch in Verbindung steht, die im Grundkörper 12 vorgesehen sind. Die Anschlussvorrichtung 14 umfasst ein Anschlusskabel 15 und beispielsweise einen Anschlussstecker, um die erzeugte elektrische Energie zum Verbraucher zu führen und/oder in ein öffentliches Stromnetz einzuspeisen.

An der Rückseite des Grundkörpers 12 bzw. an seiner rückseitigen Fläche ist zumindest ein Befestigungselement 18 vorgesehen. Das Befestigungselement 18 ist beispielsweise als Befestigungsprofil ausgebildet. Die Ausgestaltung dieses Befestigungselementes 18 geht aus den weiteren Seitenansichten gemäß Figur 2 und Figur 3 hervor. Hierbei handelt es sich beispielsweise um ein sogenanntes C-Profil. Weitere alternative Ausführungsformen sind ebenfalls möglich. Die beiden Befestigungselemente 18 sind bevorzugt parallel zueinander beabstandet an der Rückseite des Grundkörpers 12 vorgesehen, wobei dazwischen liegend die Anschlussvdrrichtung 14 angeordnet ist. Die Befestigungselemente 18 erstrecken sich im Wesentlichen über die Höhe oder die Breite des Solarelementes 11, wobei bevorzugt ein geringer Abstand zu einer oberen und unteren Seitenkante 21, 22 vorgesehen ist. Diese Befestigungselemente 18 sind mit deren Anlagefläche oder Anlageflächen 24 an der Rückseite des Grundkörpers 12 verklebt. Durch diese bevorzugt vollflächige Verklebung der Anlagefläche 24 der Befestigungselemente 18 zur Rückseite des Grundkörpers 12 ist eine stoffschlüssige Verbindung geschaffen, welche die Belastungs- und Prüfvorschriften erfüllt. Durch die vollflächige Anlage der Befestigungselemente 18 an der Rückseite des Grundkörpers 12 wird einerseits eine dauerhafte elastische Lagerung und andererseits eine Aussteifung des Grundkörpers 12 vom Solarelement 11, insbesondere bei Windlasten erzielt.

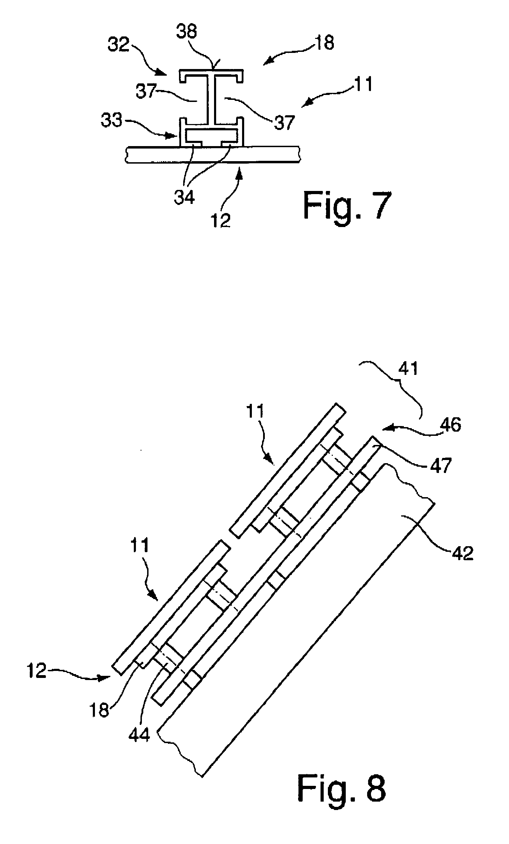

Die in den Figuren 1 bis 3 beispielsweise dargestellte rahmenlose Befestigung durch die Befestigungselemente 18 ermöglicht eine Vereinfachung bei der Herstellung der Solarelemente 11 und eine Reduzierung der erforderlichen Bauteile. Die bisherige Anordnung von einem umlaufenden Rahmen und zwischen dem Grundkörper 12 und dem Rahmen angeordneten Gummiprofilen kann dadurch entfallen. Darüber hinaus weist eine solche Anordnung des Weiteren den Vorteil auf, dass eine flächenförmige Krafteinleitung von einem Befestigungspunkt 31 mit einer Unterkonstruktion 46 (Figur 8) über die Befestigungselemente 18 auf den Grundkörper 12 durch die Klebeverbindung zwischen der Anlagefläche 24 und dem Grundkörper 12 gegeben ist.

Im Ausführungsbeispiel gemäß den Figuren 1 bis 3 kann das Solarelement 11 als sogenanntes Dünnschichtmodul ausgebildet sein. Der Grundkörper 12 umfasst eine Schicht 26 aus einem Floatglas, eine Schicht 27 aus einem gehärteten Glas und dazwischen liegend eine Schicht 28 als Halbleiterschicht, welche die Solarzellen bildet. Das Befestigungselement 18 ist mit seiner Anlagefläche 24 bevorzugt an der Schicht 27 aus dem gehärteten Glas verklebt.

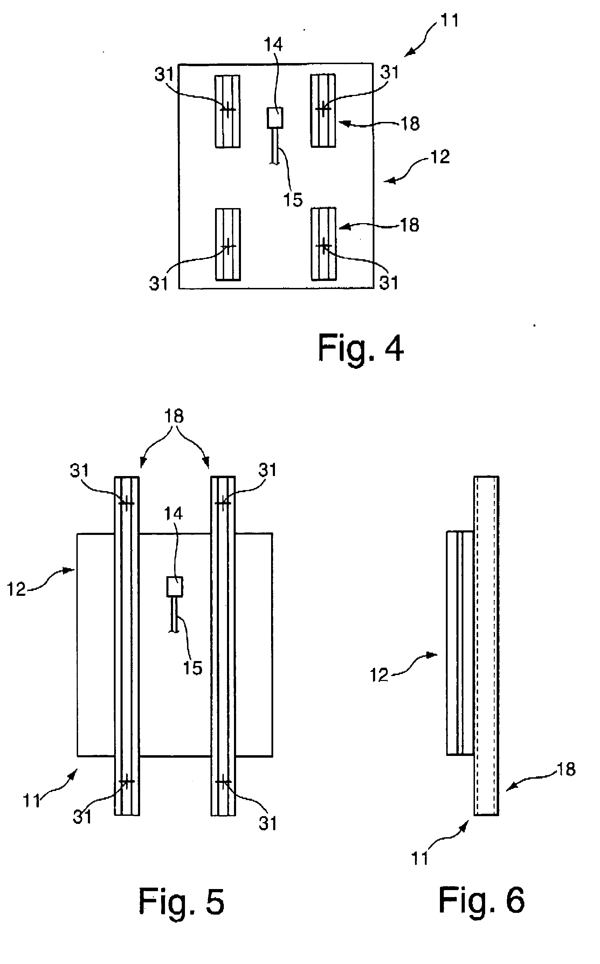

In Figur 4 ist eine alternative Ausführungsform einer rahmenlosen Befestigung zur Ausführungsform gemäß den Figuren 1 bis 3 dargestellt. Im Hinblick auf die Übereinstimmungen wird auf die vorangehende Figurenbeschreibung Bezug genommen. Diese Ausführungsform weicht lediglich dahingehend ab, dass anstelle von zwei im Wesentlichen über die Höhe oder die Breite des Grundkörpers 12 sich erstreckenden Befestigungselemente 12 beispielsweise vier Befestigungselemente 18 vorgesehen sind. Diese Befestigungselemente 18 sind insbesondere im Bereich von Befestigungspunkten 31 vorgesehen, über welche das Solarelement 11 an einer Unterkonstruktion 46 (Figur 8) befestigt wird. Diese Befestigungselemente 18 können beispielsweise dasselbe Profil wie die Befestigungselemente 18 in Figur 1 bis 3 aufweisen. Während der Verklebung zur Bildung einer rahmenlosen Befestigung werden die Längsachsen der einzelnen Befestigungselemente 18 zueinander ausgerichtet, so dass beispielsweise zwei in einer Längsachse angeordnete Befestigungselemente 18 miteinander fluchten und die benachbarten Befestigungselemente 18 parallel dazu verlaufen. Alternativ können auch mehrere Befestigungselemente 18 entlang der Höhe oder der Breite vorgesehen sein und in einer Linie miteinander fluchten. Die Länge der in Figur 4 beispielhaft dargestellten Befestigungselemente 18 ist dabei derart vorgesehen, um zumindest geringe Toleranzen bei der Ausrichtung einer Unterkonstruktion 46 (Figur 8) bezüglich den Befestigungspunkten 31 ausgleichen zu können.

In den Figuren 5 bis 7 ist eine weitere alternative Ausführungsform einer rahmenlosen Befestigung eines Solarelementes 11 zu Figur 1 dargestellt. Im Hinblick auf die Übereinstimmungen wird auf die vorangehende Figurenbeschreibung Bezug genommen. Bei dieser Ausführungsform sind die Befestigungselemente 18 abweichend zu den zuvor beschriebenen Ausführungsformen durchgehend ausgebildet und erstrecken sich über die Seitenkanten 21, 22 des Grundkörpers 25 hinaus. Durch eine solche Ausgestaltung wird ermöglicht, dass die Befestigungspunkte 31 außerhalb der Rückseite bzw. der rückseitigen Fläche des Grundkörpers 12 liegen können. Durch eine solche Ausgestaltung wird eine vollständige Auflage des Grundkörpers 12 über die Höhe oder die Breite des Grundkörpers 12 an den Befestigungselementen 18 geschaffen.

Die Befestigungselemente 18 im Ausführungsbeispiel gemäß den Figuren 5 bis 7 ist beispielsweise als ein Befestigungsprofil ausgebildet, welches einen ersten C-förmigen Abschnitt 33 aufweist, wobei die beiden aufeinander zugerichteten Schenkel 34 an deren Außenseiten jeweils eine Anlagefläche 24 bilden, über welche die Verklebung zur Rückseite des Grundkörpers 12 erfolgt. Dadurch wird ermöglicht, dass beispielsweise auf das Befestigungselement 18 auftreffende Feuchtigkeit durch das C-förmige Profil nach unten abgeführt werden kann. An dem C-förmigen Profil 33 schließt sich beispielsweise ein Halteabschnitt 32 an, an welchem nicht näher dargestellt Klemm- und/oder Schraubverbindungen zur Fixierung an der Unterkonstruktion 46 angreifen. Dieser Halteabschnitt 32 weist beispielsweise zwei einander gegenüberliegende C-förmige Befestigungsabschnitte 37 auf. Gleichzeitig ist eine Auflagefläche 38 ausgebildet, so dass das Befestigungselement 18 an einer Unterkonstruktion 46 aufliegen kann. Alternativ kann diese Auflagefläche 38 auch als weitere Klemm- oder Befestigungsfläche ausgebildet sein.

Die Ausgestaltung des vorbeschriebenen Befestigungselementes 18 ist nur beispielhaft und kann weitere verschiedene geometrische Ausführungsformen umfassen. Die Befestigungselemente 18 werden bevorzugt als Strangpressprofile, insbesondere Aluminiumstrangpressprofile, eingesetzt. Alternativ können auch Stahlprofile oder Kunststoffprofile eingesetzt werden.

In Figur 8 ist beispielsweise eine Seitenansicht einer Solaranlage 41 dargestellt, welche auf einem Dach 42 eines Gebäudes angeordnet ist. Diese Solaranlage 41 umfasst mehrere Solarelemente 11, welche über ein Adapterprofil 44 an einer Strebe 47 befestigt sind und eine Unterkonstruktion 46 bilden. Diese Unterkonstruktion 46 kann beispielsweise an Dachziegeln oder Dachpfannen, an Dächern aus Welleternit oder auf einem Trapezdach oder dergleichen vorgesehen sein. Zur Befestigung des Adapterprofiles 44 an den Streben 47 sind bevorzugt Schraub-KlemmVerbindungen vorgesehen, die eine einfache und schnelle Montage ermöglichen.

Die Unterkonstruktion 46 umfasst beispielsweise vertikal verlaufende Streben 47, an welchen horizontal ausgerichtete Adapterprofile 41 über beispielsweise eine Schraub-Klemm-Verbindung befestigt sind. In den Befestigungspunkten 31 werden die Befestigungselemente 18 des Solarelementes 11 zum Adapterprofil 44 fixiert. Diese Adapterprofile 44 ermöglichen die Aufnahme von mehreren nebeneinander angeordneten Solarelementen 11. Durch diese kreuzweise Anordnung der Streben 47, der Adapterprofile 44 und der Befestigungselemente 18 der Solarelemente 11 ist eine einfache Ausrichtung von mehreren Solarelementen 11 zueinander ermöglicht, so dass eine möglichst geschlossene und großflächige Anordnung von Solarelementen 11 vorzusehen. Zwischen den einzelnen Solarelementen 11 wird nur ein geringer Spalt eingestellt, um zu ermöglichen, dass Feuchtigkeit zwischen den einander zugewandten Stirnseiten der Grundkörper 12 ablaufen kann und bei Wärmedehnungen ein Aneinanderliegen der Grundkörper 12 verhindert ist.

Es versteht sich, dass alternativ zu den dargestellten Ausführungsformen auch mehrere parallel nebeneinander angeordnete Befestigungselemente 18 an dem Grundkörper 12 vorgesehen sein können. Alternativ kann in Abhängigkeit der Unterkonstruktion 46 auch vorgesehen sein, dass Befestigungselemente 18 beispielsweise bezüglich deren Befestigungsnut im Befestigungsprofil rechtwinklig zueinander ausgerichtet sind, so dass ein Befestigungselement rechtwinklig zu den Seitenkanten 21, 22 und ein weiteres Befestigungselement parallel zu den Seitenkanten 21, 22 ausgerichtet ist. Eine beliebige Kombination hiervon ist ebenfalls denkbar.

## Patentansprüche

1. Solarelement für Solaranlagen, insbesondere Photovoltaikanlagen, mit einem Grundkörper (12), der eine Vielzahl von miteinander verbundenen Solarzellen umfasst und an einer Rückseite des Grundkörpers (12) eine Anschlussvorrichtung (14) aufweist und mit zumindest einem Befestigungselement (18) zur Montage an einer Unterkonstruktion (46), **dadurch gekennzeichnet, dass** das zumindest eine Befestigungselement (18) an der Rückseite des Grundkörpers (12) vorgesehen ist und eine rahmenlose Befestigung zum Grundkörper (12) bildet und dass das zumindest eine an der Rückseite des Grundkörpers (12) angeordnete Befestigungselement (18) durch eine Klebeverbindung an dem Grundkörper (12) befestigt ist.

2. Solarelement nach Anspruch 1, **dadurch gekennzeichnet, dass** wenigstens zwei, jeweils einen Befestigungspunkt (31) zugeordnete Befestigungselemente (18) zur Montage des Solarelementes (11) an einer Unterkonstruktion (46) vorgesehen sind.

3. Solarelement nach Anspruch 1, **dadurch gekennzeichnet, dass** das zumindest eine Befestigungselement (18) sich in der Länge über zwei Befestigungspunkte (31), die zur Montage des Solarelementes (11) an einer Unterkonstruktion (46) vorgesehen sind, erstreckt.

4. Solarelement nach einem der vorhergehenden Ansprüche, **dadurch gekennzeichnet, dass** zumindest zwei Befestigungspunkte (31) des zumindest einen Befestigungselementes (18) innerhalb der rückseitigen Fläche des Grundkörpers (12) liegen.

5. Solarelement nach einem der Ansprüche 1 bis 3, **dadurch gekennzeichnet, dass** zumindest zwei Befestigungspunkte (37) des zumindest einen Befestigungselementes (18) außerhalb der Rückseite des Grundkörpers (12) liegen.

6. Solarelement nach einem der vorhergehenden Ansprüche, **dadurch gekennzeichnet, dass** das zumindest eine Befestigungselement als Befestigungsprofil ausgebildet ist, welches zumindest eine sich abschnittsweise erstreckende Anlagefläche (24) zur Ausbildung der Klebeverbindung mit der Rückseite des Grundkörpers (12) aufweist.

7. Solarelement nach einem der vorhergehenden Ansprüche, **dadurch gekennzeichnet, dass** das zumindest eine Befestigungselement (18) als Strangpressprofil ausgebildet ist und wenigstens einen Halteabschnitt (32) aufweist.

8. Solarelement nach einem der vorhergehenden Ansprüche, **dadurch gekennzeichnet, dass** an dem zumindest einen Befestigungselement (18) ein Adapterprofil (44) zur Montage an einer Unterkonstruktion (46) vorgesehen ist.

9. Solarelement nach einem der vorhergehenden Ansprüche, **dadurch gekennzeichnet, dass** der Grundkörper (12) als Dünnschichtmodul ausgebildet ist und eine erste Schicht (26) aus Floatglas, eine zweite Schicht (27) aus gehärtetem Glas und dazwischen liegend eine Schicht (28) aus Halbleitermaterial aufweist.
